# FASCICULE DE BREVET EUROPEEN

(11) **EP 2 184 652 B1**
(45) Date de publication et mention de la délivrance du brevet: **05.10.2011**
(21) Numéro de dépôt: 09173722.1
(22) Date de dépôt: 22.10.2009
(51) Int. Cl.: G04B 17/06, G04D 3/00

(54) **Spiral à élévation de courbe en matériau micro-usinable**
Spiralfeder mit Endkurvenerhöhung aus mikro-bearbeitbarem Material
Spiral with terminal curve elevation in micro-machinable material

(30) Priorité: 06.11.2008 EP 08168453
(43) Date de publication de la demande: 12.05.2010
(73) Titulaire: Montres Breguet SA, 1344 L'Abbaye (CH)
(72) Inventeur: Zaugg, Alain, 1348, Le Brassus (CH); Bifrare, Christophe, 1342, Le Pont (CH)
(74) Mandataire: Couillard, Yann Luc Raymond

(56) Documents cités:
- EP-A- 0 732 635
- EP-A- 1 605 323
- EP-A- 1 818 736
- EP-A- 1 837 722
- EP-A- 1 978 421
- EP-A1- 2 105 807
- CH-A5- 695 395
- FR-A- 2 315 714

## Description

### Domaine de l'invention

L'invention se rapporte à un spiral à élévation de courbe et son procédé de fabrication et, plus particulièrement, à un tel spiral réalisé à base d'un matériau micro-usinable.

### Arrière plan de l'invention

L'organe régulateur d'une pièce d'horlogerie comporte généralement un volant d'inertie appelé balancier et un résonateur appelé spiral. Ces pièces sont déterminantes pour la qualité de marche de la pièce d'horlogerie. En effet, ils régulent la marche du mouvement, c'est-à-dire qu'ils contrôlent sa fréquence. Le document FR 2 315 714 divulgue un exemple de fabrication de spiral métallique dont le ressort-spiral est prolongé par une courbe terminale afin de vérifier la théorie de Phillips.

Il est connu de fabriquer une partie d'une pièce d'horlogerie en matériau à base de silicium. En effet, l'utilisation d'un matériau micro-usinable comme le silicium présente des avantages en terme de précision de fabrication grâce aux avancées des procédés actuels notamment dans le domaine de l'électronique. Il permet en outre de bénéficier de sa très faible sensibilité au magnétisme et au changement de température. Le document EP 2 105 807 divulgue un spiral à élévation de courbe en silicium.

### Résumé de l'invention

Le but de la présente invention est de pallier tout ou partie les inconvénients cités précédemment en proposant un spiral à élévation de courbe en matériau micro-usinable de fabrication simple et qui autorise un écart de marche réduit.

A cet effet, l'invention se rapporte à un spiral à élévation de courbe en matériau micro-usinable comportant un ressort-spiral monté en une seule pièce et coaxialement avec une virole, une courbe terminale et un dispositif d'élévation entre de la spire externe dudit ressort-spiral et ladite courbe terminale afin d'améliorer la concentricité de développement dudit spiral caractérisé en ce que le dispositif d'élévation comporte une attache mécanique comprenant un corps principal sur lequel sont montés élastiquement des moyens de pincement afin de relier et bloquer respectivement les extrémités de ladite spire externe et de ladite courbe terminale contre le corps principal.

Avantageusement, à partir de parties planes réalisées dans un matériau micro-usinable, on réalise un assemblage simple à plusieurs plans quasiment insensible au magnétisme et au changement de température qui ne nécessite plus les étapes complexes de mises au point actuellement effectuées pour la fabrication d'un tel spiral à partir d'une lame métallique.

Conformément à d'autres caractéristiques avantageuses de l'invention :
- l'épaisseur dudit corps principal est sensiblement égale à la hauteur desdites extrémités ;
- les moyens de pincement comportent un premier et un deuxième bras respectivement rattachés à un premier et un deuxième bouts du corps principal ;
- chacune desdites extrémités est bloquée selon son épaisseur par poussée d'un contact d'un desdits bras contre une butée dudit corps principal ;
- chacune desdites extrémités est bloquée selon sa hauteur par poussée d'un deuxième contact d'un desdits bras contre une deuxième butée dudit corps principal ;
- les bras sont sensiblement parallèles au corps principal ;
- selon les deux modes de réalisation, l'attache mécanique possède une symétrie centrale par rapport au centre du corps principal ;
- le dispositif d'élévation comporte, sur au moins une desdites extrémités, des bourrelets permettant de borner la position de l'attache par rapport à la longueur de ladite au moins une desdites extrémités ;
- le dispositif d'élévation comporte en outre des moyens de solidarisation entre ladite attache mécanique et lesdites extrémités afin d'améliorer la force de fixation dudit dispositif d'élévation ;
- les moyens de solidarisation comportent une couche comportant un matériau adhésif, un matériau métallique, un oxyde ou un alliage de fusion des matériaux utilisés ou même une brasure ;
- ledit matériau micro-usinable est à base de silicium, de silice cristallisée ou d'alumine cristallisée ;
- la courbe terminale est du type Phillips afin d'améliorer la concentricité de développement dudit spiral ;
- au moins une spire interne du ressort-spiral comporte une courbe du type Grossmann afin d'améliorer la concentricité de développement dudit spiral.

De plus, l'invention se rapporte à une pièce d'horlogerie caractérisée en ce qu'elle comporte un spiral à élévation de courbe conforme à l'une des variantes précédentes.

Enfin, l'invention se rapporte à un procédé de fabrication d'un spiral à élévation de courbe comportant l'étape suivante :
a) graver sélectivement au moins une cavité dans une couche de matériau micro-usinable pour définir un ressort-spiral monté coaxialement avec une virole ;
   caractérisé en ce qu'il comporte les étapes suivantes :
b) graver sélectivement au moins une cavité dans une couche de matériau micro-usinable pour définir une attache mécanique comprenant un corps principal sur lequel sont montés élastiquement des moyens de pincement ;
c) graver sélectivement au moins une cavité dans une couche de matériau micro-usinable pour définir une courbe terminale ;
d) assembler l'attache mécanique entre ledit ressort-spiral et ladite courbe terminale afin de former le spiral à élévation de courbe. et en ce que les étapes a), b) et c) sont réalisées en même temps dans la même couche de matériau micro-usinable.

Avantageusement, à partir de peu d'étapes, il est réalisé un spiral en matériau micro-usinable avec une meilleure précision par rapport aux étapes complexes de mises au point actuellement effectuées pour la fabrication d'un tel spiral à partir d'une lame métallique.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une représentation en perspective d'un example de spiral a élévation de courbe qui ne fait pas partie de l'invention revendiquée ;
- la figure 2 est une représentation vue de dessus de la figure 1 ;
- la figure 3 est une représentation de la coupe A-A de la figure 2 ;
- la figure 4 est un schéma fonctionnel des étapes du procédé de fabrication ;
- la figure 5 est une représentation en perspective d'un spiral à élévation de courbe selon un premier mode de réalisation de l'invention ;
- la figure 6 est une représentation partielle et agrandie de figure 5 ;
- la figure 7 est une représentation en perspective d'une attache mécanique selon l'invention ;
- la figure 8 est une représentation en coupe d'une partie de la figure 5.

### Description détaillée des modes de réalisation préférés

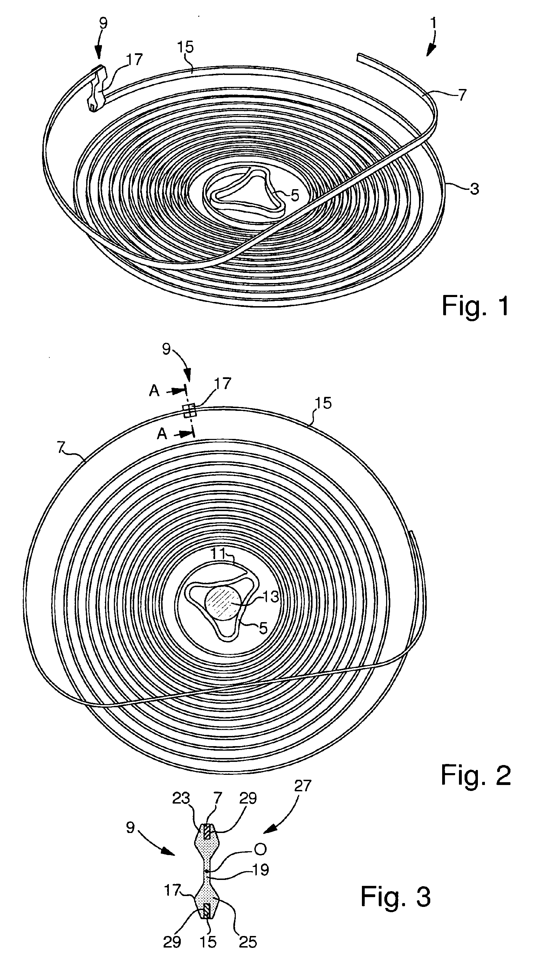

Dans l'exemple illustré aux figures 1 à 3, on peut voir un spiral à élévation de courbe généralement annoté 1. Le spiral 1 est destiné à être monté dans une pièce d'horlogerie en coopération avec un balancier. Il comporte un ressort-spiral 3, une virole 5, une courbe terminale 7 et un dispositif d'élévation 9. Préférentiellement, le ressort-spiral 3 et la virole 5 forment une pièce unique afin d'éviter les imprécisions au niveau de leur interface qui nuiraient à la symétrie de développement du spiral 1.

Comme illustré aux figures 1 et 2, on peut voir que le ressort-spiral 3 comporte préférentiellement une spire interne 11 comprenant une courbe du type Grossmann. Une courbe du type Grossmann permet de compenser l'utilisation d'une virole 5 en rectifiant la spire interne 11 par rapport à la courbe idéale d'un spiral parfait du type Archimède. A ces mêmes figures 1 et 2, on peut voir que la virole 5 est de forme générale triangulaire et est apte à recevoir un axe 13 de balancier. Bien entendu, la forme générale de l'axe 13 de balancier peut différer sans sortir du cadre de l'invention.

Préférentiellement, dans l'exemple illustré aux figures 1 et 2, la courbe terminale 7 est du type Phillips, c'est-à-dire une courbe qui, pendant le développement du spiral 1, permet de garder un centre de gravité situé sur l'axe 13. De manière préférée, comme illustré à la figure 2, les hauteurs de la courbe terminale 7 et du ressort-spiral 3 sont identiques.

Grâce au respect de la géométrie de la courbe terminale 7 et de l'ensemble ressort-spiral 3 - virole 5 exposée ci-dessus, le développement symétrique du spiral 1 est structurellement garanti, cependant, le type de fabrication et le matériau utilisé ne doivent pas fausser le développement.

Afin de garantir la précision de fabrication de ces courbes mais également pour rendre quasiment insensible le spiral 1 au magnétisme et au changement de température, on peut utiliser un matériau à base de silicium. En effet, c'est un matériau micro-usinable, c'est-à-dire un matériau qui peut être fabriqué avec une précision inférieure au micromètre, par exemple, par gravage ionique réactif profond d'une plaque à base de silicium cristallin (également connu sous l'abréviation « DRIE » venant des termes anglais « Deep Reactive Ion Etching »).

Bien entendu, le silicium n'est pas le seul matériau qui possède ces caractéristiques. D'autres matériaux micro-usinables sont envisageables comme, par exemple, la silice cristallisée ou l'alumine cristallisée.

Préférentiellement, le matériau à base de silicium peut également être recouvert de son oxyde afin d'adapter sa dilatation mais également son coefficient thermoélastique par rapport à celui du balancier afin de régler finement l'isochronisme du mouvement de la pièce d'horlogerie, c'est-à-dire rendre minimal son écart de marche.

Afin de réaliser le spiral à élévation de courbe 1, également appelé spiral Breguet, il est utilisé un dispositif d'élévation 9 destiné à rendre solidaires la spire externe 15 du ressort-spiral 3 avec la courbe terminale 7 située au-dessus dudit ressort-spiral. Comme illustré aux figures 1 à 3, le dispositif d'élévation 9 comporte une attache mécanique 17 comprenant un corps principal 19 prolongé de chaque côté par un moyen de pincement 23, 25. Comme pour la courbe terminale 7 et l'ensemble ressort-spiral 3 - virole 5, l'attache mécanique 17 est également préférentiellement réalisée à partir d'un matériau micro-usinable comme, par exemple, un matériau à base de silicium.

Comme illustré en coupe à la figure 3, le corps principal 19 de l'attache mécanique 17 est sensiblement parallélépipédique et comporte une épaisseur sensiblement équivalente aux hauteurs de la courbe terminale 7 et de la spire externe 15 du ressort-spiral 3. Les moyens de pincement 23, 25 sont sensiblement symétriques par rapport au corps principal 19 et comportent chacun un profil sensiblement en U destiné respectivement à s'attacher à l'extrémité de la courbe terminale 7 et à l'extrémité de la spire externe 15 du ressort-spiral 3 par recouvrement au moins partiel.

Dans l'exemple illustré aux figures 1 à 3, les profils en U sont réalisés sur toute la largeur de l'attache mécanique 17 et recouvrent respectivement toute l'épaisseur de la courbe terminale 7 et de la spire externe 15 du ressort-spiral 3 en ne laissant qu'une des faces parallèles aux hauteurs non recouverte. Bien entendu, les profils des moyens de pincement 23, 25 peuvent être différents l'un par rapport à l'autre et/ou ne pas être uniformes sur toute la largeur de l'attache mécanique 17 et/ou s'étendrent que sur une partie de ladite largeur. Il peut également être envisagé qu'au moins un des profils ne soit pas en forme de U mais sensiblement en forme circulaire, elliptique, carrée ou rectangulaire permettant ainsi d'entièrement recouvrir l'extrémité de la courbe terminale 7 et/ou de la spire externe 15 du ressort-spiral 3.

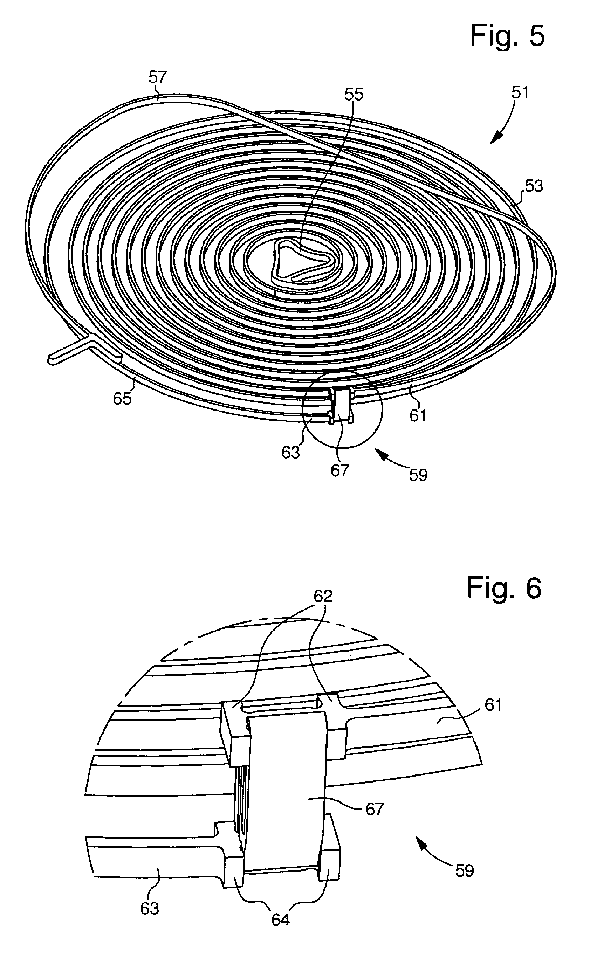

Selon un premier mode de réalisation du dispositif d'élévation 59 selon l'invention, il est réalisé un spiral à élévation de courbe 51 comme illustré aux figures 5 à 8. Le spiral 51 est également du type Breguet et comporte les mêmes caractéristiques que le premier mode de réalisation à part pour son dispositif d'élévation 59. Ce dernier est destiné à rendre solidaires la spire externe 65 du ressort-spiral 53 avec la courbe terminale 57 située au-dessus dudit ressort-spiral.

Comme illustré aux figures 5 à 8, le dispositif d'élévation 59 comporte une attache mécanique 67 comprenant un corps principal 69 sur lequel sont montés élastiquement des moyens de pincement 73, 75 afin de bloquer respectivement les extrémités 61, 63 de la spire externe 65 et de la courbe terminale 57 contre le corps principal 69.

Comme pour la courbe terminale 57 et l'ensemble ressort-spiral 53 - virole 55, l'attache mécanique 67 est également préférentiellement réalisée à partir d'un matériau micro-usinable comme, par exemple, un matériau à base de silicium.

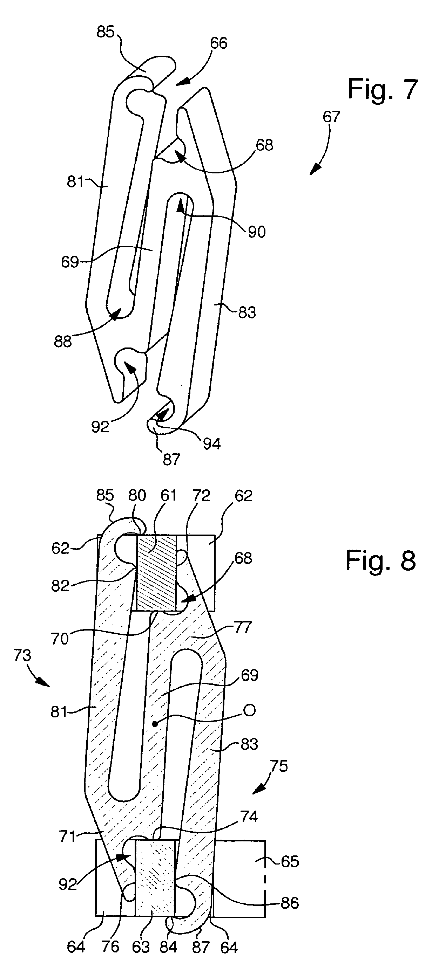

Comme illustré aux figures 7 et 8, l'attache mécanique 67 comporte un corps principal 69 sensiblement parallélépipédique et, préférentiellement, possède, comme l'attache mécanique 17 du premier mode de réalisation, une symétrie centrale par rapport au centre O du corps principal 69. De plus, les moyens de pincement 73, 75 comportent un premier 81 et un deuxième 83 bras respectivement rattachés à un premier 71 et un deuxième 77 bouts du corps principal 69 et sont destinés respectivement à s'attacher à l'extrémité 61 de la courbe terminale 57 et à l'extrémité 63 de la spire externe 65 du ressort-spiral 53 par recouvrement au moins partiel.

Comme visible aux figures 7 et 8, les bras 81, 83 sont sensiblement parallèles au corps principal 69. De plus, avantageusement selon l'invention, les bras 81 et 83 sont rendus mobiles élastiquement par formation de creux 88, 90 autorisant leur débattement par rapport au corps principal 69.

Plus précisément, chacune des extrémités 61, 63 est bloquée selon son épaisseur par poussée d'un contact 82, 86 d'un desdits bras 81, 83 contre une butée 72, 76 du corps principal 69. Ainsi, comme visible à la figure 8, le contact 82 du premier bras 81 pousse l'extrémité 61 de la courbe terminale 57 contre la butée 72 du bout 77 du corps principal 69. De plus, le contact 86 du deuxième bras 83 pousse l'extrémité 63 de la spire externe 65 du ressort-spiral 53 contre la butée 76 du bout 71 du corps principal 69. Ainsi, comme pour le premier mode de réalisation, l'attache 67 permet de pincer chacune des extrémités 61, 63 selon son épaisseur.

Préférentiellement selon l'invention, chaque contact 72, 76 est monté élastiquement sur son extrémité 77, 71 par formation de creux 68, 92 autorisant leur débattement par rapport au reste du corps principal 69.

Avantageusement par rapport au premier mode de réalisation, le dispositif d'élévation 59 permet également que chacune des extrémités 61, 63 soit bloquée également selon sa hauteur par poussée d'un deuxième contact 80, 84 d'un desdits bras 81, 83 contre une deuxième butée 70, 74 du corps principal 69.

Ainsi, comme visible à la figure 8, chaque bras 81, 83 comporte un ergot 85, 87 formant crochet qui supporte un desdits deuxièmes contacts 80, 84 localisé sensiblement à la perpendiculaire par rapport au premier contact 82, 86. Avantageusement selon l'invention, les ergots 85 et 87 sont rendus mobiles élastiquement par formation de creux 66, 94 autorisant leur débattement par rapport à leur bras 81, 83.

Par conséquent, le contact 80 du premier bras 81 pousse l'extrémité 61 de la courbe terminale 57 contre la butée 70 du bout 77 du corps principal 69. De plus, le contact 84 du deuxième bras 83 pousse l'extrémité 63 de la spire externe 65 du ressort-spiral 53 contre la butée 74 du bout 71 du corps principal 69. Ainsi, l'attache 67 permet également de pincer chacune des extrémités 61, 63 selon sa hauteur.

Bien entendu, les profils des moyens de pincement 73, 75 peuvent être différents l'un par rapport à l'autre et/ou ne pas être uniformes sur toute la largeur de l'attache mécanique 67 et/ou s'étendrent que sur une partie de ladite largeur. Il peut également être envisagé qu'au moins un des profils soit sensiblement en forme circulaire, elliptique, carrée ou rectangulaire permettant ainsi d'entièrement recouvrir l'extrémité 61 de la courbe terminale 57 et/ou l'extrémité 63 de la spire externe 65 du ressort-spiral 53.

Préférentiellement selon l'invention, pour le premier mode de réalisation, le dispositif d'élévation 59 comporte, sur au moins une desdites extrémités, des bourrelets 62, 64 permettant de borner la position de l'attache 67 par rapport à la longueur de ladite au moins une desdites extrémités. Les bourrelets 62, 64, uniquement visibles aux figures 5 à 8, mais parfaitement applicables au premier exemple de réalisation qui ne fait pas partie de l'invention revendiquée, forment un cadre de quatre plots permettant de bloquer respectivement, d'une part, le premier bras 81 et l'extrémité 77 du corps principal 69 selon une certaine position par rapport à la longueur de la courbe terminale 57 et, d'autre part, le deuxième bras 83 et l'extrémité 71 du corps principal 69 selon une certaine position par rapport à la longueur du ressort-spiral 53.

On comprend donc notamment dans le cas du premier mode de réalisation que l'attache mécanique 67 est idéalement bloquée contre les extrémités 61 et 63 selon trois plans sensiblement perpendiculaires.

Avantageusement, les dispositifs d'élévation 9, 59 peuvent comporter également des moyens de solidarisation 27 destinés à améliorer la force de fixation du dispositif d'élévation 9, 59. Selon l'invention, plusieurs variantes de moyens de solidarisation sont possibles suivant le procédé utilisé comme expliqué ci-après. Ainsi, les moyens de solidarisation comportent une couche 29 entre l'attache mécanique 17, 67 et les extrémités de la courbe terminale 7, 57 et de la spire externe 15, 65 du ressort-spiral 3, 53. Une telle couche 29 peut ainsi comporter un matériau adhésif, un matériau métallique, un oxyde ou un alliage de fusion des matériaux utilisés ou même une brasure.

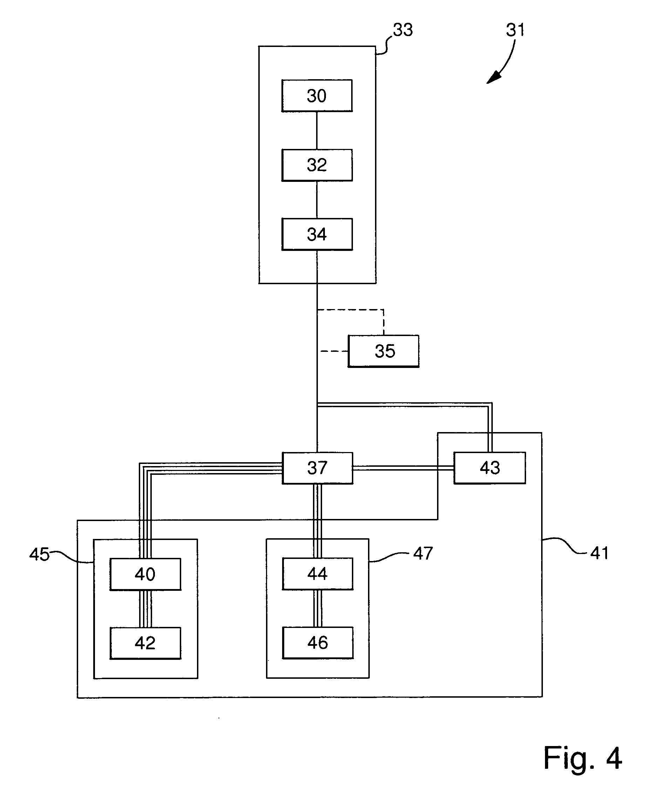

Le procédé 31 de fabrication d'un spiral à élévation de courbe 1, 51 selon l'invention va maintenant être expliqué à l'aide de la figure 4. Le procédé 31 comporte principalement une étape 33 de fabrication des composants et une étape 37 d'assemblage des composants. Préférentiellement, le procédé comporte également une étape 35 de renforcement mécanique desdits composants et une étape 41 de renforcement de l'assemblage.

Comme illustré à la figure 4, la première étape 33 est destinée à fabriquer lors des phases respectives 30, 32 et 34 les composants du spiral à élévation de courbe 1, 51, c'est-à-dire l'ensemble ressort-spiral 3, 53 - virole 5, 55, la courbe terminale 7, 57 et le dispositif d'élévation 9, 59. Préférentiellement, afin de fabriquer lesdits composants de manière très précises, on utilise un procédé de micro-usinage par voie sèche ou humide. Dans l'exemple expliqué ci-dessus, le micro-usinage peut être une attaque sèche anisotropique du type gravage ionique réactif profond d'une plaque à base de silicium cristallin (également connu sous les termes anglais « Deep Reactive Ion Etching »).

Ainsi, les phases 30, 32 et 34 consistent dans un premier temps à revêtir la plaque d'un masque de protection, par exemple, à l'aide d'un procédé de photolithographie d'une résine photosensible. Dans un deuxième temps, la plaque est soumise à l'attaque anisotropique, seules les parties de la plaque non protégées étant gravées. Finalement dans un troisième temps, le masque de protection est retiré. On comprend donc que le masque de protection détermine directement la forme finale des composants gravés.

Avantageusement, il est ainsi aisé de fabriquer le spiral à élévation de courbe 1, 51 selon les cotes de mouvements ou calibres existants. Ainsi, de manière avantageuse, les mouvements ou calibres peuvent toujours être fabriqués en intervertissant uniquement le spiral à élévation de courbe métallique utilisé habituellement par le nouveau fabriqué en matériau micro-usinable avec une amélioration de leur écart de marche et de leur qualité.

Préférentiellement, on comprend également qu'il est possible de réaliser les phases 30, 32 et 34 de l'étape 33 en même temps sur la même plaque. On peut donc conclure qu'il est possible de graver sur ladite plaque tous les composants nécessaires en plusieurs exemplaires.

La deuxième étape 37 est destinée à assembler les composants gravés lors de l'étape 33, c'est-à-dire l'ensemble ressort-spiral 3, 53 - virole 5, 55, la courbe terminale 7, 57 et le dispositif d'élévation 9, 59. A cet effet, dans un premier temps, chaque composant nécessaire est détaché de la plaque gravée, par exemple par rupture de ponts de matière laissés entre chaque composant et sa plaque. Dans un deuxième temps, les trois composants plats sont assemblés afin de réaliser le spiral 1 à partir de trois parties. Dans ce deuxième temps, l'extrémité de la spire externe 15, 65 du ressort-spiral 3, 53 est ainsi emboîtée dans un des moyens de pincement 25, 75 de l'attache mécanique 17, 67 puis celle de la courbe terminale 7, 57 dans l'autre moyens de pincement 23, 73.

Préférentiellement, selon le premier exemple , à la fin de l'étape 37, le spiral 1 comporte une hauteur globale égale à deux fois l'épaisseur de la plaque gravée, représentant la courbe terminale 7 et l'ensemble ressort-spiral 3 - virole 5, et la longueur de l'attache mécanique 17 qui ne recouvre pas ces derniers. En effet, l'attache mécanique 17 est préférentiellement gravée dans la plaque selon le motif de la figure 3.

Préférentiellement, selon le premier mode de réalisation, à la fin de l'étape 37, le spiral 51 comporte une hauteur globale égale à la hauteur de l'attache mécanique 67.

Comme expliqué ci-dessus, le procédé 31 peut également comporter une étape 35 destinée à renforcer les composants gravés. Par rapport à l'exemple d'un matériau à base de silicium, une telle étape peut consister à réaliser une oxydation par plasma apte à créer en surface du dioxyde de silicium. Dans l'exemple illustré en traits discontinus à la figure 4, l'étape 35 de renforcement est réalisée entre l'étape 33 de gravage et l'étape 37 d'assemblage ce qui permet d'oxyder la plaque gravée entière, c'est-à-dire tous les composants en même temps. Bien entendu, l'étape 35 peut également être réalisée après les phases 30 et/ou 32 et/ou 34.

Comme expliqué ci-dessus, le procédé 31 peut également comporter une étape 41 destinée à renforcer l'assemblage des composants gravés. Dans l'exemple illustré à la figure 4, on distingue trois modes de réalisation distincts dont les processus sont représentés à l'aide de traits double, triple ou quadruple.

Selon un premier mode de réalisation illustré par un trait double à la figure 4, l'étape 41 de renforcement peut consister à déposer, lors d'une phase 43, une couche 29 à l'intérieur des moyens de pincement 23, 73 et/ou 25, 75 afin d'autoriser les chassage de l'attache mécanique 17, 67 sur les extrémités de la courbe terminale 7, 57 et de la spire externe 15, 65 du ressort-spiral 3, 53. Ainsi, dans l'exemple cité ci-dessus du matériau à base de silicium, une telle couche 29 pourrait consister en une couche métallique obtenue, par exemple, par dépôt physique en phase vapeur. En effet, l'absence de domaine plastique du silicium, peut nécessiter l'utilisation d'une couche 29 apte à se déformer pour éviter la rupture des moyens de pincement 23, 73, 25, 75 car la force de chassage nécessaire au bon fonctionnement du spiral 1, 51 peut générer une contrainte supérieure à la limite de la zone élastique dudit silicium.

Bien entendu, alternativement, les couches 29 peuvent également être déposées non pas à l'intérieur des moyens de pincement 23, 73, 25, 75 mais sur les extrémités de la courbe terminale 7, 57 et de la spire externe 15, 65 du ressort-spiral 3, 53. On comprend donc, dans l'exemple illustré par un trait double à la figure 4, que les couches 29 doivent être, dans le premier mode de réalisation, déposées avant l'étape 37 d'assemblage. Cependant, le dépôt de la phase 43 peut également consister en une couche 29 de brasure. Le brasage pourrait alors s'effectuer soit pendant l'étape 37 d'assemblage soit après.

Selon un second mode de réalisation illustré par un trait quadruple à la figure 4, l'étape 41 de renforcement de l'assemblage peut consister à déposer, lors d'un processus 45, une couche adhésive 29 entre les moyens de pincement 23, 73 et/ou 25, 75 et la courbe terminale 7, 57 et de la spire externe 15, 65 du ressort-spiral 3, 53 afin d'améliorer la force de fixation du dispositif d'élévation 9, 59. Ainsi, une première phase 40 peut consister à déposer un matériau adhésif à l'interface des composants assemblés puis, préférentiellement, dans une deuxième phase 42 à chauffer l'ensemble afin d'activer ledit matériau adhésif. Une telle couche 29 pourrait alors consister, par exemple, en une couche de colle polymère.

Bien entendu, alternativement, la phase de dépôt 40 peut également être réalisée avant l'étape 37 d'assemblage si le matériau adhésif à l'état non activé n'est pas assez visqueux. Le dépôt pourrait alors être effectué à l'intérieur des moyens de pincement 23, 73, 25, 75 et/ou sur les extrémités de la courbe terminale 7, 57 et de la spire externe 15, 65 du ressort-spiral 3, 53 avant l'étape 37 d'assemblage et, préférentiellement, chauffés, après l'étape 37 d'assemblage, lors de la phase 42. On comprend donc, dans cet exemple du second mode de réalisation, que les couches 29 permettent, grâce à leur pourvoir d'adhérence, de fermement maintenir l'assemblage en place.

Selon un troisième mode de réalisation illustré par un trait triple à la figure 4, l'étape 41 de renforcement de l'assemblage peut consister à former, lors d'un processus 47, une couche de solidarisation 29 entre les moyens de pincement 23, 73 et/ou 25, 75 et la courbe terminale 7, 57 et du ressort-spiral 3, 53 afin d'améliorer la force de fixation du dispositif d'élévation 9, 59.

Ainsi, dans l'exemple cité ci-dessus du matériau à base de silicium, une première phase 44 peut consister à oxyder, par exemple par attaque plasma, la surface du spiral 1, 51 à base de silicium afin de former une gangue en dioxyde de silicium apte à améliorer la solidarisation ses composants assemblés puis, préférentiellement, dans une deuxième phase 46 à chauffer l'ensemble afin de parfaire ladite solidarisation.

Bien entendu, alternativement, la phase d'oxydation 44 peut également être réalisée avant l'étape 37 d'assemblage et remplacée par l'étape optionnelle d'oxydation 35. Ainsi, les composants déjà oxydés seraient assemblés lors de l'étape 37 et, préférentiellement, chauffés lors de la phase 46 afin de créer une couche 29 unique en dioxyde de silicium à l'interface entre l'attache mécanique 17, 67, la courbe terminale 7, 57 et le ressort-spiral 3, 53. On notera qu'une phase d'hydrophilisation préalable à la phase 46 de chauffage permet d'améliorer l'étape d'unification des couches de dioxyde de silicium. On comprend donc, dans cet exemple du troisième mode de réalisation, que les couches 29, comme les deux autres modes de réalisation, permettent un renforcement de l'assemblage entre l'attache mécanique 17, 67, la courbe terminale 7, 57 et le ressort-spiral 3, 53.

Enfin, à titre d'alternative au troisième mode de réalisation, il peut être envisagé un processus 47 comportant une unique étape 46 de chauffage des composants en silicium assemblés lors de l'étape 37 destinée à souder les interfaces sous contraintes desdits composants.

## Revendications

1. Spiral (51) à élévation de courbe comportant un ressort-spiral (53) monté en une seule pièce en matériau micro-usinable et coaxialement avec une virole (55), une courbe terminale en matériau micro-usinable (57) et un dispositif d'élévation (59) en matériau micro-usinable entre de la spire externe (65) dudit ressort-spiral et ladite courbe terminale afin d'améliorer la concentricité de développement dudit spiral **caractérisé en ce que** le dispositif d'élévation (59) comporte une attache mécanique (67) qui comprend un corps principal (69) sur lequel sont montés élastiquement des moyens de pincement (73, 75) afin de relier et bloquer respectivement les extrémités de ladite spire externe et de ladite courbe terminale contre le corps principal (69).

2. Spiral (51) selon la revendication 1, **caractérisé en ce que** les moyens de pincement (73, 75) comportent un premier (81) et un deuxième (83) bras respectivement rattachés à un premier (71) et un deuxième (77) bouts du corps principal (69).

3. Spiral (51) selon la revendication 2, **caractérisé en ce que** ledit dispositif d'élévation est agencé pour que chacune desdites extrémités (61, 63) soit bloquée selon son épaisseur par poussée d'un contact (82, 86) d'un desdits bras (81, 83) contre une butée (72, 76) dudit corps principal.

4. Spiral (51) selon la revendication 3, **caractérisé en ce que** ledit dispositif d'élévation est agencé pour que chacune desdites extrémités (61, 63) soit bloquée selon sa hauteur par poussée d'un deuxième contact (80, 84) d'un desdits bras (81, 83) contre une deuxième butée (70, 74) dudit corps principal.

5. Spiral (51) selon l'une des revendications 2 à 4, **caractérisé en ce que** les bras (81, 83) sont sensiblement parallèles au corps principal (69).

6. Spiral (51) selon l'une des revendications précédentes, **caractérisé en ce que** l'attache mécanique (67) possède une symétrie centrale par rapport au centre du corps principal (69).

7. Spiral (51) selon l'une des revendications précédentes, **caractérisé en ce que** le dispositif d'élévation (59) comporte, sur au moins une desdites extrémités, des bourrelets (62, 64) permettant de borner la position de l'attache (67) par rapport à la longueur de ladite au moins une desdites extrémités.

8. Spiral (51) selon l'une des revendications précédentes, **caractérisé en ce que** le dispositif d'élévation (59) comporte en outre des moyens de solidarisation (27) entre ladite attache mécanique et lesdites extrémités afin d'améliorer la force de fixation dudit dispositif d'élévation.

9. Spiral (51) selon la revendication 8, **caractérisé en ce que** les moyens de solidarisation (27) comportent un matériau adhésif.

10. Spiral (51) selon l'une des revendications précédentes, **caractérisé en ce que** ledit matériau micro-usinable est à base de silicium.

11. Spiral (51) selon la revendication 10 dépendante de la revendication 8, **caractérisé en ce que** les moyens de solidarisation (27) comportent une couche d'oxyde dudit matériau micro-usinable.

12. Spiral (51) selon la revendication 10 ou 11, **caractérisé en ce qu'**il comporte au moins une partie en oxyde de silicium afin de le rendre plus résistant mécaniquement et d'ajuster son coefficient thermo-élastique.

13. Spiral (51) selon l'une des revendications précédentes, **caractérisé en ce que** la courbe terminale (7) est du type Phillips afin d'améliorer la concentricité de développement dudit spiral.

14. Spiral (51) selon l'une des revendications précédentes, **caractérisé en ce qu'**au moins une spire interne (11) du ressort-spiral (3, 53) comporte une courbe du type Grossmann afin d'améliorer la concentricité de développement dudit spiral.

15. Spiral (51) selon l'une des revendications précédentes, **caractérisé en ce que** l'épaisseur dudit corps principal est sensiblement égale à la hauteur desdites extrémités.

16. Pièce d'horlogerie **caractérisée en ce qu'**elle comporte un spiral à élévation de courbe (51) conforme à l'une des revendications précédentes.

17. Procédé de fabrication (31) d'un spiral à élévation de courbe (51) comportant l'étape suivante :
a) graver (30) sélectivement au moins une cavité dans une couche de matériau micro-usinable pour définir un ressort-spiral (53) monté coaxialement avec une virole (55); **caractérisé en ce qu'**il comporte en outre les étapes suivantes:
b) graver (32) sélectivement au moins une cavité dans une couche de matériau micro-usinable pour définir une attache mécanique (67) comprenant un corps principal (69) sur lequel sont montés élastiquement des moyens de pincement (73, 75) ;
c) graver (34) sélectivement au moins une cavité dans une couche de matériau micro-usinable pour définir une courbe terminale (57) ;
d) assembler (37) l'attache mécanique (67) entre ledit ressort-spiral et ladite courbe terminale afin de former le spiral à élévation de courbe (51)
et **en ce que** les étapes a), b) et c) sont réalisées en même temps (33) dans la même couche de matériau micro-usinable.

## Claims

1. Breguet overcoil balance spring (51) including a hairspring (53) mounted in a single part, made of micromachinable material, and coaxially with a collet (55), a terminal curve (57) made of micromachinable material and an elevation device (59) made of micromachinable material between the outer coil (65) of said hairspring and said terminal curve for improving the concentric development of said balance spring **characterized in that** the elevation device (59) includes a mechanical fastener (67) having a main body (69) on which some gripping means (73, 75) are elastically mounted to link and lock the respective ends of said outer coil and said terminal curve against the main body (69).

2. Balance spring (51) according to claim 1, **characterized in that** the gripping means (73, 75) have a first (81) and a second (83) arm respectively attached to a first (71) and a second (77) end of the main body (69).

3. Balance spring (51) according to claim 2, **characterized in that** said device is arranged so that each of said ends (61, 63) is locked along the thickness thereof by the thrust of a contact (82, 86) of one of said arms (81, 83) against a stop member (72, 76) of said main body.

4. Balance spring (51) according to claim 3, **characterized in that** said device is arranged so that each of said ends (61, 63) is locked along the height thereof by the thrust of a second contact (80, 84) of one of said arms (81, 83) against a second stop member (70, 74) of said main body.

5. Balance spring (51) according to any of claims 2 to 4, **characterized in that** the arms (81, 83) are approximately parallel to the main body (69).

6. Balance spring (51) according to any of the preceding claims, **characterized in that** the mechanical fastener (67) has central symmetry relative to the centre of the main body (69).

7. Balance spring (51) according to any of the preceding claims, **characterized in that**, on at least one of said ends, the elevation device (59) has bumps (62, 64) for delimiting the position of the fastener (67) relative to the length of said at least one of said ends.

8. Balance spring (51) according to the any of preceding claims, **characterized in that** the elevation device (59) also includes joining means (27) between said mechanical fastener and said ends for improving the securing force of said elevation device.

9. Balance spring (51) according to claim 8, **characterized in that** the joining means (27) include an adhesive material.

10. Balance spring (51) according to any of the preceding claims, **characterized in that** said micro-machinable material is silicon-based.

11. Balance spring (51) according to claim 10, dependent from claim 8, **characterized in that** the joining means (27) include a layer of oxide of said micro-machinable material.

12. Balance spring (51) according to claim 10 or 11, **characterized in that** it includes at least one silicon oxide part to make said balance spring more mechanically resistant and to adjust the thermo-elastic coefficient thereof.

13. Balance spring (51) according to any of the preceding claims, **characterized in that** the terminal curve (7) is a Phillips curve to improve the concentric development of said balance spring.

14. Balance spring (51) according to any of the preceding claims, **characterized in that** at least one inner coil (11) of the hairspring (3, 53) includes a Grossmann curve to improve the concentric development of said balance spring.

15. Balance spring (51) according to any of the preceding claims, **characterized in that** the thickness of said main body is approximately equal to the highness of said ends.

16. Timepiece **characterized in that** it includes a Breguet overcoil balance spring (51) according to any of the preceding claims.

17. Method of manufacturing (31) a Breguet overcoil balance spring (51) that includes the following step:
a) selectively etching (30) at least one cavity in a layer of micro-machinable material to define a hairspring (53) mounted coaxially with a collet (55);
**characterized in that** it further includes the following steps:
b) selectively etching (32) at least one cavity in a layer of micro-machinable material to define a mechanical fastener (67) comprising a main body (69) on which some gripping means (73, 75) are elastically mounted;
c) selectively etching (34) at least one cavity in a layer of micro-machinable material to define a terminal curve (57);
d) assembling (37) the mechanical fastener (67) between said balance spring and said terminal coil to form the elevation curve balance spring (51).
and **in that** steps a), b) and c) are performed at the same time (33) in the same layer of micro-machinable material.

## Patentansprüche

1. Spirale (51) mit Krümmungserhöhung, die eine Spiralfeder (53), die einteilig aus einem mikrobearbeitbaren Material koaxial mit einer Spiralrolle (55) angebracht ist, eine Endkrümmung aus einem mikrobearbeitbaren Material (57) und eine Erhöhungsvorrichtung (59) aus einem mikrobearbeitbaren Material zwischen der äußeren Windung (65) der Spiralfeder und der Endkrümmung, um die Konzentrizität der Entwicklung der Spirale zu verbessern, umfasst, **dadurch gekennzeichnet, dass** die Erhöhungsvorrichtung (59) eine mechanische Befestigung (67) umfasst, die einen Hauptkörper (69) aufweist, an dem Klemmmittel (73, 75) elastisch angebracht sind, um die Enden der äußeren Windung und der Endkrümmung zu verbinden und gegen den Hauptkörper (69) zu blockieren.

2. Spirale (51) nach Anspruch 1, **dadurch gekennzeichnet, dass** die Klemmmittel (73, 75) einen ersten Arm (81) und einen zweiten Arm (83) aufweisen, die an einem ersten Ende (71) bzw. einem zweiten Ende (77) des Hauptkörpers (69) befestigt sind.

3. Spirale (51) nach Anspruch 2, **dadurch gekennzeichnet, dass** die Erhöhungsvorrichtung dazu ausgelegt ist, jedes der Enden (61, 63) entsprechend ihrer Dicke durch Schieben eines Kontakts (82, 86) eines der Arme (81, 83) gegen einen Anschlag (72, 76) des Hauptkörpers zu blockieren.

4. Spirale (51) nach Anspruch 3, **dadurch gekennzeichnet, dass** die Erhöhungsvorrichtung dazu ausgelegt ist, jedes der Enden (61, 63) entsprechend ihrer Höhe durch Schieben eines zweiten Kontakts (80, 84) eines der Arme (81, 83) gegen einen zweiten Anschlag (70, 74) des Hauptkörpers zu blockieren.

5. Spirale (51) nach einem der Ansprüche 2 bis 4, **dadurch gekennzeichnet, dass** die Arme (81, 83) zu dem Hauptkörper (69) im Wesentlichen parallel sind.

6. Spirale (51) nach einem der vorhergehenden Ansprüche, **dadurch gekennzeichnet, dass** die mechanische Befestigung (67) eine Mittelsymmetrie in Bezug auf das Zentrum des Hauptkörpers (69) besitzt.

7. Spirale (51) nach einem der vorhergehenden Ansprüche, **dadurch gekennzeichnet, dass** die Erhöhungsvorrichtung (59) an wenigstens einem ihrer Enden Wulste (62, 64) aufweist, die ermöglichen, die Position der Befestigung (67) in Bezug auf die Länge des wenigstens einen dieser Enden zu begrenzen.

8. Spirale (51) nach einem der vorhergehenden Ansprüche, **dadurch gekennzeichnet, dass** die Erhöhungsvorrichtung (59) außerdem Befestigungsmittel (27) zwischen der mechanischen Befestigung und den Enden aufweist, um die Befestigungskraft der Erhöhungsvorrichtung zu verbessern.

9. Spirale (51) nach Anspruch 8, **dadurch gekennzeichnet, dass** die Befestigungsmittel (27) ein Klebstoffmaterial enthalten.

10. Spirale (51) nach einem der vorhergehenden Ansprüche, **dadurch gekennzeichnet, dass** das mikrobearbeitbare Material ein Material auf Siliciumbasis ist.

11. Spirale (51) nach Anspruch 10, wenn abhängig von Anspruch 8, **dadurch gekennzeichnet, dass** die Befestigungsmittel (27) eine Oxidschicht des mikrobearbeitbaren Materials enthalten.

12. Spirale (51) nach Anspruch 10 oder 11, **dadurch gekennzeichnet, dass** sie wenigstens einen Siliciumoxidteil enthält, um sie mechanisch beständiger zu machen und um ihren thermoelastischen Koeffizienten einzustellen.

13. Spirale (51) nach einem der vorhergehenden Ansprüche, **dadurch gekennzeichnet, dass** die Endkrümmung (7) vom Phillips-Typ ist, um die Konzentrizität der Entwicklung der Spirale zu verbessern.

14. Spirale (51) nach einem der vorhergehenden Ansprüche, **dadurch gekennzeichnet, dass** wenigstens eine innere Windung (11) der Spiralfeder (3, 53) eine Krümmung vom Grossmann-Typ besitzt, um die Konzentrizität der Entwicklung der Spirale zu verbessern.

15. Spirale (51) nach einem der vorhergehenden Ansprüche, **dadurch gekennzeichnet, dass** die Dicke des Hauptkörpers im Wesentlichen gleich der Höhe der Enden ist.

16. Zeitmessgerät, **dadurch gekennzeichnet, dass** es eine Spirale (51) mit Krümmungserhöhung nach einem der vorhergehenden Ansprüche umfasst.

17. Verfahren für die Herstellung (31) einer Spirale (51) mit Krümmungserhöhung, das den folgenden Schritt umfasst:
a) selektives Ätzen (30) wenigstens eines Hohlraums in einer Schicht aus mikrobearbeitbarem Material, um eine Spiralfeder (53) zu definieren, die koaxial zu einer Spiralrolle (55) definiert ist;
**dadurch gekennzeichnet, dass** es außerdem die folgenden Schritte umfasst:
b) selektives Ätzen (32) wenigstens eines Hohlraums in einer Schicht aus mikrobearbeitbarem Material, um eine mechanische Befestigung (67) zu definieren, die einen Hauptkörper (69) aufweist, an dem Klemmmittel (73, 75) elastisch angebracht sind;
c) selektives Ätzen (34) wenigstens eines Hohlraums in einer Schicht aus mikrobearbeitbarem Material, um eine Endkrümmung (57) zu definieren;
d) Einfügen (37) der mechanischen Befestigung (67) zwischen die Spiralfeder und die Endkrümmung, um die Spirale (51) mit Krümmungserhöhung zu bilden, und
dass die Schritte a), b) und c) gleichzeitig (33) in derselben Schicht aus mikrobearbeitbarem Material ausgeführt werden.
